# EUROPÄISCHE PATENTANMELDUNG

(11) **EP 1 238 783 A2**
(43) Veröffentlichungstag der Anmeldung: **11.09.2002**
(21) Anmeldenummer: 02004454.1
(22) Anmeldetag: 27.02.2002
(51) Int. Cl.: B29C 65/40, B23K 37/02

(54) **Schweissvorrichtung zum Herstellen von Kunststoffbehältern und Verfahren zur Durchführung eines Schweissvorganges**

(30) Priorität: 09.03.2001 DE 10112214
(71) Anmelder: Rothwein, Ludwig, 70736 Fellbach-Öffingen (DE); Rothwein, Eugen, 70736 Fellbach-Öffingen (DE)
(72) Erfinder: Rothwein, Ludwig, 70736 Fellbach-Öffingen (DE); Rothwein, Eugen, 70736 Fellbach-Öffingen (DE)
(74) Vertreter: Patentanwälte Ruff, Wilhelm, Beier, Dauster & Partner

(57) **Zusammenfassung**

Aufgabe der Erfindung ist es, eine Vorrichtung zu schaffen, die in der Lage ist, den Schweißvorgang weitgehend selbsttätig und mit geringen Rüst- und Umbauzeiten vorzunehmen.

Eine erfindungsgemäße Schweißvorrichtung (11) dient den Herstellern von Kunststoffbehältern, insbesondere von Großbehältern. Die Schweißvorrichtung weist dabei einen schweißextruder (12) auf. Der Schweißextruder ist an einem Halter (13) befestigt und gegenüber diesem in wendigstens einer Richtung um einen begrenzten Verfahrweg verfahrbar. Diese Verfahrbewegung dient dazu, dass der Schweißextruder (12) mit einer definierten Kraft an der Schweißstelle anliegt. Gemäss der Erfindung ist der Halter (13) am freien Ende einer Führungsstange (14) angeordnet und die Führungsstange (14) in einer Portalverfahreinrichtung in einer Verfahrebene verfahrbart gehalten.

## Beschreibung

Die Erfindung betrifft eine Schweißvorrichtung zum Herstellen von Kunststoffbehältern, insbesondere Großbehältern sowie ein Verfahren zur Durchführung eines Schweißvorganges.

Beispielsweise aus der DE 40 16 414 C1 ist es bekannt, daß bei Kunststoffbehältern, insbesondere bei Kunststoffgroßbehältern an der Außenseite und/oder an der Innenseite zum einen die Seitenwände mit dem Boden bzw. Deckel zu ver-schweißen (Stumpfschweißung). Darüber hinaus ist es aus dieser Druckschrift auch bekannt, bei Kunststoffbehältern die Behälterwände durch umlaufende Stahlarmierungen (Verstärkungsbänder), die in der Regel in als U-Profilen ausgebildeten Schutzhüllen angeordnet sind, von innen und/oder von außen auf die Seitenwände des Behälters aufzuschweißen und somit die auf die Seitenwände des Behälters wirkenden Druckkräfte besser abzustützen. Es ist bekannt, diese Art von Verstärkungen sowohl auf der Außenseite des Behälters als auch alternativ oder ergänzend hierzu auf der Innenseite des Behälters aufzubringen. Die Stahlarmierungen sind dabei durch ein sie umgebendens U-Rohr auf den dem Behälter ab-gewandten Seiten geschützt, während auf der dem Behälter zugewandten Seite die Behälterwand einen Abschluß bildet. Sowohl zur optimalen Überleitung der Kräfte als auch um einen hermetischen Abschluß der Stahlverstärkung sicherzustellen, müssen dabei die Spalte zwischen dem U-Rohr und der Behälterwand mit einer kontinuierlichen Schweißnaht dichtend verschweißt werden.

Um maschinell eine solche Schweißnaht insbesondere bei voluminösen Rechteckbehältern durchzuführen, wird in dem gattungsgemäß zugrundegelegten Stand der Technik vorgeschlagen, einen Schweißkopf mit einem Schweißextruder auf einer Schiene verfahrbar anzuordnen, wobei die Schiene insbesondere an der Behälterwand über Klemmvorrichtungen oder Spannvorrichtungen, wie pneumatische Saugvorrichtungen, an der Behälterwand festlegbar ist.

Diese Vorrichtung ermöglicht es, in einem kontinuierlichen Schweißvorgang entlang einer geradlinigen Behälterwand eine durchgehende Schweißraupe zu erzeugen, die sich über die gesamte Länge der Behälterwand erstreckt und die dabei sehr gleichmäßig ausgebildet sein kann. Dabei ist allerdings zu beachten, daß zum Anschweißen eines jeden Verstärkungsprofils zwei Schweißnähte angebracht werden müssen und aus diesem Grund für jedes Profil zumindest zweimal die Transportschiene am Behälter befestigt und bezüglich dem vorzusehenden Verlauf der Schweißnaht auszurichten ist. Soweit entlang einer Behälterwand mehrere parallel zueinander verlaufende Schweißnähte angebracht werden sollen, beispielsweise weil ein Boden oder ein Deckel aufgeschweißt werden soll oder weil mehrere parallel zueinander verlaufende Verstärkungsprofile aufgeschweißt werden sollen, muß eine große Anzahl von Ausrichtungen und neuen Befestigungen der Transportschiene an der Behälterwand erfolgen. Auch ist die Vorrichtung darauf angewiesen, daß die Behälterwand einen überwiegend geradlinigen Verlauf hat, da der transportierte Schweißextruder nur in der Lage ist, mit der geradlinigen Schiene auf einer geradlinigen Wandung angebracht zu werden und parallel zu diesem Verfahrweg zu schweißen. Darüber hinaus ist die Schweißvorrichtung nicht in der Lage, eine rundum laufende kontinuierliche Schweißnaht zu erzeugen, sondern muß vielmehr für jeden der Wandabschnitte getrennt eine Schweißnaht erzeugen. Bei einem Rechteckbehälter führt dies dazu, daß dann, wenn ein umlaufendes Verstärkungsprofil angeordnet werden soll, auf jeder vier Behälterseiten die Schweißschiene 4 zweimal, insgesamt also achtmal ausgerichtet und angeordnet werden muß. Somit bleibt die Verarbeitung eines solchen Großbehälters und die Durchführung von umlaufenden Schweißnähten, auch wenn der Schweißvorgang selber selbsttätig durchgeführt wird, sehr arbeitsintensiv, da ständig eine Person vorhanden sein muß, um die Schweißschiene entlang der der Schweißvorgang durchgeführt wird, an dem Behälter zu befestigen und auszurichten.

Dem gegenüber ist es Aufgabe der Erfindung, eine Vorrichtung zu schaffen, die in der Lage ist, den Schweißvorgang weitgehend selbsttätig und mit geringen Rüst- und Umbauzeiten vorzunehmen.

Die Aufgabe der Erfindung wird bei Zugrundelegen der gattungsgemäßen Merkmale erfindungsgemäß durch eine Schweißvorrichtung mit den kennzeichnenden Merkmalen des Anspruches 1 gelöst. Ein vorteilhaftes Verfahren zur Durchführung eines Schweißvorganges, insbesondere mittels dieser Schweißvorrichtung, ergibt sich aus dem unabhängigen Anspruch 16.

Eine erfindungsgemäße Schweißvorrichtung dient den Herstellern von Kunststoffbehältern, insbesondere von Großbehältern. Die Schweißvorrichtung weist dabei einen Schweißextruder auf. Der Schweißextruder ist an einem Halter befestigt und gegenüber diesem in wenigstens einer Richtung um einen begrenzten Verfahrweg verfahrbar. Diese Verfahrbewegung dient dazu, daß der Schweißextruder mit einer definierten Kraft an der Schweißstelle anliegt. Gemäß der Erfindung ist der Halter am freien Ende einer Führungsstange angeordnet und die Führungsstange in einer Portalverfahreinrichtung in einer Verfahrebene verfahrbar gehalten.

Durch diese Art der Befestigung des Schweißextruders an der Führungsstange ist weiterhin gewährleistet, daß der Schweißextruder mit definierter Kraft an der Schweißstelle anliegt und somit eine gleichmäßige und gute Schweißqualität erreicht wird. Andererseits wird durch die Befestigung der Führungsstange in einer Portalverfahreinrichtung die Möglichkeit geschaffen, daß der Schweißextruder in der Verfahrebene eine beliebige Position einnimmt und damit einer beliebigen Kontur folgen kann. Hierdurch wird erreicht, daß über alle Seiten eines Behälters hinweg eine kontinuierliche Schweißraupe erzeugt werden kann, die als geschlossener Streckenzug ausgebildet ist. Dabei kann die Schweißung ohne zwischenzeitliches Absetzen und ohne zwischenzeitliche Eingriffe durch Bedienpersonal erfolgen.

Die Portalverfahreinrichtung weist dabei vorzugsweise parallel zueinander verlaufende Laufschienen auf. Zwischen den Laufschienen erstreckt sich eine Brücke, die Brücke ist dabei quer zu ihrer Erstreckungsrichtung auf den Laufschienen verfahrbar. Auf der Brücke selbst ist eine Laufkatze angeordnet, die in der Erstreckungsrichtung der Brücke verfahrbar ist. Die Laufkatze trägt die Führungsstange. Durch diese Ausbildung von Portalverfahreinrichtungen ist es möglich, daß in zwei Richtungen linear unabhängig voneinander erfolgende Bewegungen stattfinden und somit ein hoher Grad an Bewegungsfreiheit für die Führungsstange gegeben ist.

Um eine Höhenverfahrbarkeit der Schweißvorrichtung zu erreichen, ist es gemäß einer weiterführenden Ausgestaltung vorgesehen, daß die Führungsstange axial zu ihrer Erstreckungsrichtung verstellbar an der Laufkatze gehalten ist und hierzu insbesondere als Teleskopstange ausgebildet ist. Durch die axiale Verfahrbarkeit der Führungsstange in ihrer Erstreckungsrichtung ist die Lage des Schweißkopfes bezüglich der Verfahrebene veränderbar, so daß dann, wenn die Verfahrebene parallel zur Bodenfläche verläuft, über das Verstellen der Lage der Führungsstange eine Höheneinstellung des Schweißkopfes vorgenommen werden kann.

Weiter vorteilhaft ist es, wenn der Schweißextruder in der Verfahrebene um 360° um die Teleskopstange herum verschwenkbar ist. Diese Verschwenkbarkeit ermöglicht es, sowohl außenliegende Schweißnähte als auch innenliegende Schweißnähte am Behälter ohne Umrüsten anzubringen und darüber hinaus auch, in bestimmten Verfahrstellungen der Portalverfahreinrichtung den Schweißextruder bezüglich der Portalverfahreinrichtung nach außen zu richten, wodurch auch unmittelbar neben der Portalverfahreinrichtung liegende Stellen anfahrbar sein können. Dies kann insbesondere dazu genutzt werden, daß in einer Verfahrstellung der Portalverfahreinrichtung bei entsprechend ausgerichtetem Schweißextruder die Möglichkeit besteht, auf einem Arbeitstisch, insbesondere einem drehbaren Arbeitstisch, angeordnete Behälter zu bearbeiten. Dies kann insbesondere dazu genutzt werden, daß Rundbehälter auf diesem Verfahrtisch gestellt werden und gedreht werden, während die Schweißvorrichtung in einer konstanten Position bleibt und lediglich der Schweißkopf so nachgeführt wird, daß eine konstante Anlagekraft an der Schweißstelle gegeben ist.

Weiter ist es von Vorteil, wenn der Schweißextruder um einen Winkel möglichst annähernd von 180° um eine parallel zur Verfahrebene verlaufende Schwenkachse herum verdrehbar ist. Das Verdrehen um möglichst annähernd 180° ermöglicht es zum einen, auch an schlecht zugänglichen Bereichen zu arbeiten, und zum anderen ist es auch erforderlich, um die Schweißnähte ober- und unterhalb der Verstärkungsrippen zu erzeugen. Die Schwenkbewegung nach unten wird in der Regel dabei nicht be-hindert, lediglich die Schwenkbewegung nach oben wird durch die Gestaltung des Halters sowie durch die von oben angreifende Führungsstange (Teleskopstange) eingeschränkt. Durch eine Kombination von Verschwenkbarkeit und Verdrehbarkeit wird erreicht, daß der Schweißextruder in seiner Bewegung um die Führungsstange herum nahezu die Oberfläche einer Kugel bestreichen kann und somit fast beliebig ausrichtbar ist.

Gemäß einer weiterführenden vorteilhaften Ausgestaltung ist an der Schweißvorrichtung eine Steuereinrichtung vorgesehen, die das Verfahren wenigstens der Portalverfahreinrichtung derart beeinflussen kann, daß ein selbsttätiges Erzeugen eines geschlossenen Zuges an der Schweißnaht entlang einer Oberfläche des Behälters ermöglicht wird.

Gemäß einer vorteilhaften Ausgestaltung der Erfindung ist am Schweißextruder ein Sensor angeordnet, der es ermöglicht, wenigstens das Erreichen einer Kante des Behälters zu erfassen.

In einer weiterführenden Ausgestaltung der Erfindung kann es vorgesehen sein, daß der Stellweg des Schweißextruders bezüglich seinem Halter erfaßt wird, der erforderlich ist, um eine konstante Anlagekraft des Schweißextruders an der Schweißstelle aufrecht zu erhalten. Dieser Stellweg ist ein Maß für den Abstand zwischen dem Halter, also der Führungsstange, und dem Behälter bzw. der Schweißstelle an dem Behälter. In Abhängigkeit des zugelegten Verfahrwegs der Portalverfahreinrichtung und des Stellweges des Schweißextruders wird der weitere Verfahrweg der Portalverfahreinrichtung bestimmt. Damit wird erreicht, daß der Schweißextruder selbsttätig der Kontur des Kunststoffbehälters folgt. Zum Anbringen einer Schweißnaht wird man zunächst in der Regel damit beginnen, in einer der beiden in der Portalverfahreinrichtung vorgegebenen Verfahreinrichtungen, nämlich entweder der Verfahrrichtung der Brücke oder der Verfahrrichtung der Laufkatze auf der Brücke zu verfahren. Dadurch führt - mit vorgegebener Verfahrgeschwindigkeit-der Schweißkopf eine Relativbewegung bezüglich dem Kunststoffbehälter (Schweißgut) durch. Aufgrund dieses Verfahrens wird sich in der Regel der Stellweg des Schweißextruders, der erforderlich ist, um eine konstante Auflagekraft des Schweißextruders an der Schweißstelle aufrecht zu erhalten, verändern. In Abhängigkeit des Verfahrweges ändert sich also der Stellweg. Diese Änderung ist ein Maß für die Abweichung des Verfahrweges des Extruders von der abzufahrenden Kontur des Behälters. Soweit der Verfahrweg so gesteuert oder geregelt wird, daß der Stellweg über den Verfahrweg möglichst konstant bleibt, wird der Schweißextruder der Kontur des Schweißgutes folgen, ohne daß hierzu ein Verfahrweg vorgegeben werden muß oder daß der Behälter in einer bestimmten Lage bezüglich der Schweißvorrichtung ausgerichtet sein muß.

Erreicht der Schweißextruder wieder seine Ausgangsstellung, die er zu Beginn des Schweißvorganges eingenommen hatte und die beispielsweise in der Steuereinrichtung abgespeichert sein kann, wird darauf geschlossen, daß nunmehr ein geschlossener Linienzug entlang der Außenkontur des Behälters abgefahren und entlang diesem Linienzug eine Schweißnaht erzeugt wurde. Dann kann der Schweißvorgang für diese Schweißnaht beendet werden. Darüber hinaus ist es auch vorteilhaft, wenn nicht nur der Verfahrweg und somit die Position der Portalverfahreinrichtung in Abhängigkeit von Verfahrweg und Stellweg bestimmt wird, sondern auch die axiale Position der Führungsstange. Hierzu kann es erforderlich sein, daß die Steuereinrichtung die auf den Schweißextruder einwirkenden Anlagekräfte nicht nur in eine Richtung, sondern in mehrere Richtungskomponenten unabhängig voneinander mit geeigneten Sensoren ermittelt und entsprechende Signale erhält.

Die erfindungsgemäße Schweißvorrichtung dient insbesondere zum Erzeugen von Stumpf- oder Kehlnähten zwischen einem oder mehreren flächigen Elementen aus Kunststoff. Dabei sind in der Regel die Schweißnähte zwischen der Behälterwand und dem Verstärkungsprofil als Kehlnähte ausgebildet. Die Schweißnähte, die mittels der Schweißvorrichtung erzeugt werden, sind meist umlaufende, ununterbrochene Schweißnähte überwiegend in der Form eines geschlossenen Streckenzuges. Es können insbesondere Verstärkungsbänder auf die glattflächigen Seitenwände von Kunststoffbehältern, insbesondere Großbehältern, aufgeschweißt werden. Dabei sind die Verstärkungsbänder entweder zumindest auf der Außenseite oder aber zumindest auf der Innenseite des Behälters mittels der Schweißvorrichtung aufschweißbar. Darüber hinaus ist es auch noch möglich, die Behälterseitenwände mit einem Boden oder einem Deckel zu verschweißen, wobei in aller Regel der Boden einen Überstand über den Außenumfang der Seitenwände aufweist und in diesem Bereich eine Stumpf- oder eine Kehlnaht ausgebildet wird, wobei es bei der Ausbildung dieser Naht besonders stark auf die Dichtigkeit der Naht ankommt, damit nicht im Behälter bevorratete Fluide durch eventuell vorhandene Durchbrüche und undichte Stellen im Bereich der Schweißnaht entweichen können. Deshalb empfiehlt es sich besonders hier, sowohl eine Verschweißung von innen als auch eine Verschweißung von außen vorzunehmen.

Gemäß einem erfindungsgemäßen Verfahren wird ein Schweißextruder in Anlage mit einer Schweißstelle an einem Kunststoffbehälter gebracht, wobei eine definierte Anlagekraft des Schweißextruders an der Schweißstelle selbsttätig erzeugt wird, wobei zur Erzeugung einer Schweißnaht in Form eines geschlossenen Linienzugs ein Vorschub des Schweißextruders derart erfolgt, daß der Schweißextruder selbsttätig der Kontur des Kunststoffbehälters folgt.

Das Verfahren des Schweißextruders gegenüber dem Kunststoffbehälter erfolgt dabei vorzugsweise durch Verfahren einer Portalverfahreinrichtung, an der der Schweißextruder angelenkt ist.

Vorteilhaft sind dabei Ausgestaltungen, bei denen ein Sensor zum Erfassen von Kanten des Kunststoffbehälters vorgesehen sind und bei denen dann, wenn das Erreichen einer Kante fest-gestellt wird, ein Kantenverfahrvorgang durchgeführt wird. Gemäß bevorzugter Ausgestaltung wird bei einem Kantenverfahrvorgang ein Verfahren des Schweißextruders so vorgenommen, daß die Geschwindigkeit des Schweißextruders gegenüber dem Kunststoffbehälter an der Schweißstelle annähernd konstant bleibt und bei dem nach der Durchführung die Verfahrrichtung des Schweißextruders gegenüber der zuvor bestehenden Verfahrrichtung um einen vorgegebenen Wert, insbesondere um 90°, abweicht. Hierbei ist es vorteilhaft, wenn während des Kantenverfahrvorgangs ein Verschwenken des Schweißextruders um die Führungsstange herum erfolgt, so daß die Ausrichtung des Schweißextruders gegenüber der Schweißstelle wenigstens annähernd gleich bleibt.

Gemäß vorteilhafter Ausgestaltung des Verfahrens kann vorgesehen sein, daß der Stellweg des Schweißextruders bezüglich seinem ihn tragenden Halter, der führungsstangenseitig befestigt ist, in Abhängigkeit des Verfahrweges der Portalverfahreinrichtung zum Aufrechterhalten der konstanten Anlagekraft des Schweißextruders an der Schweißstelle erfaßt wird und daß in Abhängigkeit dieses Wertes die Richtung des weiteren Verfahrweges der Portalverfahreinrichtung bestimmt wird. Hierdurch wird es ermöglicht, daß die Portalverfahreinrichtung sich an eine beliebige, nicht vorgegebene Kontur des zu bearbeitenden Behälters anpassen kann. Es können mit einer solchen Steuerung prinzipiell sowohl Rundbehälter als auch beliebige Mehrkantbehälter wie Rechteckbehälter oder Sechseckbehälter bearbeitet werden, ohne daß die Kontur des Behälters der Steuerungseinrichtung vorbekannt ist oder aber eine bestimmte Ausrichtung, sei es auch nur eine Grobausrichtung des Behälters im Bereich des Verfahrweges der Portalverfahreinrichtung vorgenommen wird.

Zum Erzeugen von Schweißnähten in Form geschlossener Linienzüge kann es vorgesehen sein, daß ein Schweißvorgang automatisch dann beendet wird, wenn der Schweißextruder die zu Beginn des Schweißvorgangs bestehende Ausgangsposition wieder erreicht.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

Im übrigen ist die Erfindung auch anhand des in der Zeichnung dargestellten Ausführungsbeispieles näher erläutert; dabei zeigt:
- Fig. 1: die Seitenansicht einer erfindungsgemäßen Vorrichtung;
- Fig. 2: eine Aufsicht auf die Vorrichtung gemäß der Figur 1;
- Fig. 3: die Draufsicht auf eine Vorrichtung gemäß der Figur 1;
- Fig. 4a und Fig. 4b: in Schnitt- bzw. Teildarstellung die Anordnung eines Verstärkungsbandes an einem Behälter und
- Fig. 5: das schematische Flußdiagramm eines Verfah- rens gemäß der Erfindung.

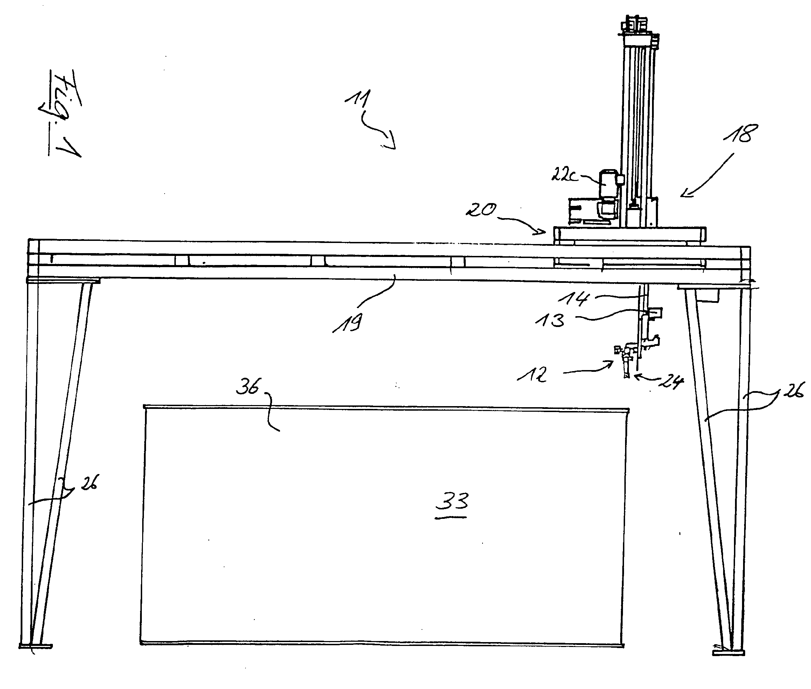

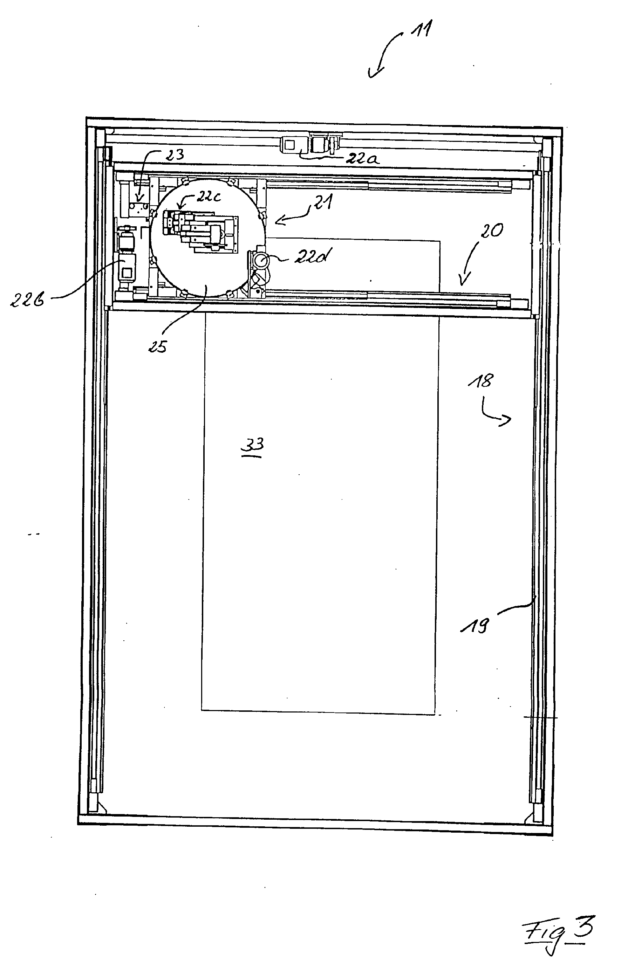

Die Figuren 1 bis 3 zeigen in Seitenansicht, Aufsicht und Draufsicht auf eine erfindungsgemäße Schweißvorrichtung.

Die Schweißvorrichtung 11 umfaßt zur Durchführung des Schweißvorgangs einen Schweißextruder 12, der mittels einem Halter 13 an dem freien Ende 15 einer Führungsstange 14 befestigt ist. Dabei ist die Führungsstange 14 als Teleskop-stange ausgebildet.

Die Teleskopstange 14 ist an einer Laufkatze 21 in ihrer Axialrichtung, also vertikal, verfahrbar gehalten. Dabei weist die Laufkatze 21 einen Drehteller 25 auf, in dessen Drehzentrum die Führungsstange 14 ausgerichtet ist. Durch ein Verschwenken des Drehtellers 25 wird der Extruder um das Zentrum der Führungsstange herum verschwenkt und kann somit eine Verschwenkbewegung um 360° in jeder Richtung, ein beliebiges freies Verschwenken in der Verfahrebene der Laufkatze 21 durchführen.

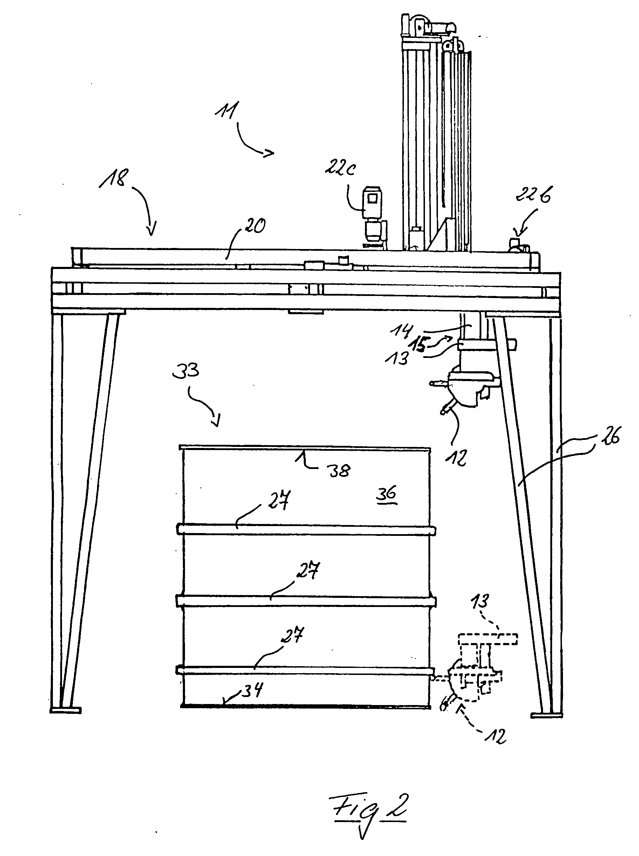

Die Laufkatze 21 ist auf einer Brücke 20 verfahrbar angeordnet. Die Brücke 20 erstreckt sich dabei zwischen zwei Laufschienen 19 der Portalverfahreinrichtung. Dabei sind die Laufschienen 19 beispielsweise über Stelzen 26 gehalten, so daß der Bereich zwischen den beiden parallel zueinander verlaufenden Laufschienen 19 einen offenen, stützenfreien Raum ergibt, wobei wenigstens nahezu jeder Punkt dieses Raumes mit dem Schweißextruder 12 durch entsprechendes Verfahren der Brücke auf der Laufschiene und der Laufkatze auf der Brücke für die Bewegung in den beiden Horizontalrichtungen sowie durch Verfahren der Führungsstange 14 in Vertikalrichtung anfahren läßt. Zum Aufschweißen von Verstärkungsbändern 27 auf einen Großbehälter 33 wird der Großbehälter 33 in den Verfahrraum zwischen den beiden Laufschienen 19 eingebracht. Ebenso wie Verstärkungsbänder 27 können an dem Behälter 33 auch ein Boden 34 oder ein Deckel 38 von außen angeschweißt werden. Verstärkungsbänder 27 können nicht nur wie in Figur 2 dargestellt an der Außenseite des Behälters aufgeschweißt werden, sondern auch an der Innenseite der Behälterwände angeschweißt werden, solange kein Deckel 38 den Zugang zu dem Behälterinnenraum verschließt. Die Schweißnähte, die mittels des Schweißextruders 12 aufgebracht werden, können dabei sowohl Kehl- als auch Stumpfnähte sein.

Zum Verfahren des Schweißextruders 12 bezüglich dem Großbehälter 33, beispielsweise einem Kunststofftank mit einer Längsseite von bis zu acht Metern und Breitseiten von drei bis vier Metern und einer Bauhöhe ebenfalls im Bereich von mehreren Metern, dienen die Stellantriebe 22a bis 22d, wobei jeder der Stellantriebe dem Verfahren in einer Bewegungsrichtung dient. So dient der Stellantrieb 22a dem Verfahren der Brücke 20 auf den Laufschienen 19 und der Stellantrieb 22b dem Verfahren der Laufkatze 21 auf der Brücke 20. Der Stellantrieb 22d dient zum Verschwenken des Drehtellers 25 auf der Laufkatze 21 und der Stellantrieb 22c zum axialen Verfahren der als Teleskopstange ausgebildeten Führungsstange 14. An dem freien Ende der Führungsstange 14 ist mittels des Halters 13 der Schweißextruder 12 befestigt. Zum Erzeugen einer konstanten Anlagekraft des Schweißschuhs, der das vordere Ende des Schweißextruders 12 bildet und der sich in Anlage mit der Schweißstelle befindet, ist der Schweißextruder 12 nochmals gegenüber dem Halter 13 mit einem eigenen Stellantrieb verfahrbar.

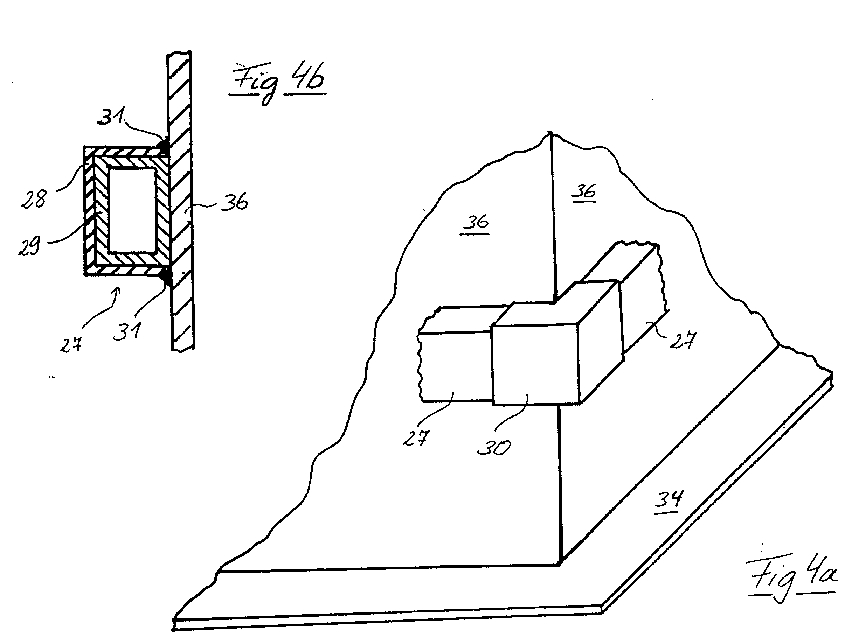

Die Figuren 4a und 4b zeigen die Befestigung eines Verstärkungsbandes im Bereich einer Seitenwand 36 des Großbehälters 33. Dabei zeigt die Figur 4a die Ausbildung einer Ecke des Großbehälters im Bereich zwischen zwei Seitenwänden, die beispielsweise rechtwinklig aufeinander stoßen. An den beiden Ecken stoßen die Verstärkungsbänder 27 stumpf aufeinander, und über die stumpfe Stoßstelle hinweg ist ein Eckstück 30 aufgesetzt, das über den eigentlichen Verstärkungsbändern 27 liegt und die Stoßstelle abdeckt.

In der Figur 4b ist ein Beispiel eines Verstärkungsbandes, wie es auf einen Großbehälter der Seitenwand 36, die aus Kunststoff besteht, aufgeschweißt werden kann. Dabei besteht das Verstärkungsband 27 in seinem Kern aus einem Metallrohr 29, das von einem U-förmigen Mantel 28 an drei Seiten umgeben ist und an der vierten Seite an der Seitenwand 36 des Groß-behälters 33 anliegt. Zur Befestigung dieses Verstärkungsbandes und zur dichtenden Umhüllung des Metallrohres 29 sind an den Stellen, an denen ober- und unterhalb des Metallrohres 29 der U-förmige Mantel 28 stumpf anstößt, die Schweißnähte 31 als kontinuierliche ununterbrochene Schweißnähte ausgebildet, in der dargestellten Ausführungsform als Kehlnähte 31.

Die erfindungsgemäße Vorrichtung ist dazu geeignet, daß durch Anfahren eines Anfangspunktes, an dem der Schweißvorgang beginnen soll und das anschließende Durchführen eines Schweißvorganges, bei dem der Schweißextruder 12 über einen kompletten Umfang des Großbehälters 36 hinweg geführt wird, eine kontinuierliche Schweißnaht selbsttätig zu erzeugen.

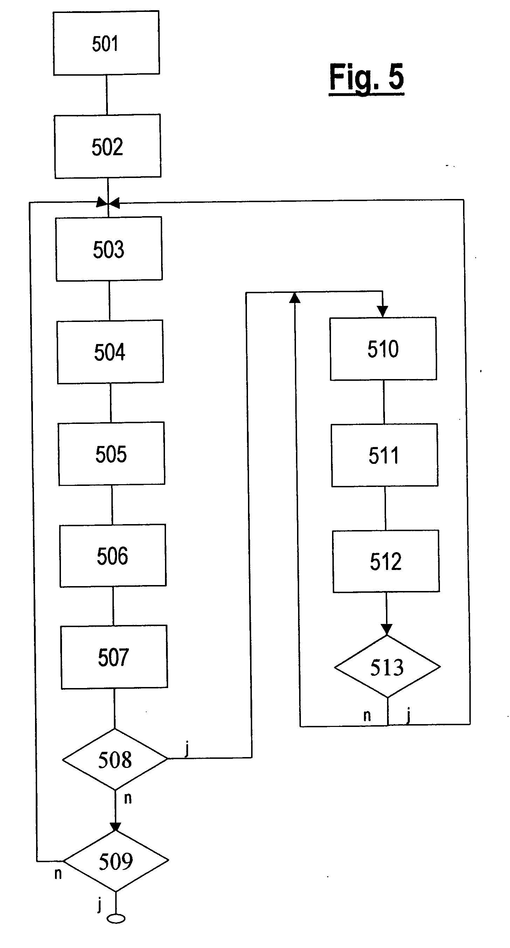

Die Durchführung eines derartigen Schweißvorgangs kann beispielsweise gemäß eines erfindungsgemäßen Verfahren geschehen, wie es schematisch in dem Flußdiagramm der Figur 5 dargestellt ist.

Gemäß dem Schritt 501 wird zunächst einmal die Ansatzstelle, an der der Schweißvorgang beginnen soll, angefahren. Bei der Ansatzstelle kann es sich sowohl um einen beliebigen Punkt an der Ober- oder Unterseite eines Verstärkungsbandes 27 als auch einen beliebigen Punkt der Anschweißstelle des Bodens 34, der Seitenwände 36 oder des Deckels 33 an den Seitenwänden 36 handeln. Hierbei kann durch Verdrehen des Schweißextruders 12 um eine Schwenkachse herum, die in der Verfahrebene verläuft und insbesondere senkrecht zur Erstreckungsrichtung des Schweißextruders 12 steht, eine Anpassung der Position des Schweißextruders dahingehend erfolgen, daß eine sichere und gute Anlage des Schweißschuhs des Schweißextruders 12 an dem Werkstück gewährleistet ist.

Dabei kann das Anfahren der Ansatzstelle gemäß dem Schritt 501 sowohl manuell von einem Benutzer gesteuert, als auch über entsprechende Erfassungseinrichtungen und Positioniereinrichtungen automatisch gesteuert erfolgen.

Sobald die Ansatzstelle erreicht ist, wird gemäß dem Schritt 502 das Schweißprogramm aktiviert. Das in diesem Ausführungsbeispiel dargelegte Ablaufprogramm sieht vor, daß gemäß den Schritten 504 bis 506 eine Anpassung des Verfahrweges an die Positionierung des Behälters 33 bezüglich der Verfahreinrichtung selbsttätig erfolgt und es so auch ermöglicht, einer nicht vorbekannten Kontur des Behälters zu folgen. Bei einem Verfahren, das die Schritte 504 bis 506 nicht vorsieht, kann ebenfalls ein selbsttätig ablaufender Schweißvorgang durchgeführt werden, es ist dann allerdings notwendig, den Behälter wenigstens näherungsweise bezüglich der Portalverfahreinrichtung zu positionieren und auszurichten. Ebenso muß dann bekannt sein, wie die Kontur des Behälters aussieht, also ob es sich um einen Rechteckbehälter oder um einen anders geformten Behälter handelt, wobei es nicht zwingend erforderlich ist, die Maße des Behälters zu kennen, damit die bekannte Kontur auch selbsttätig abgefahren werden kann.

Zu Beginn des Schweißvorganges erfolgt gemäß dem Schritt 503 ein Vorschub des Schweißextruders in einer Richtung mit der an den Schweißvorgang angepaßten Vorschubgeschwindigkeit. Bei dem Schweißvorgang handelt es sich dabei um ein Kunststoffschweißvorgang, bei dem aus dem Schweißextruder Kunststoffmasse ausgebracht an der Schweißstelle angepreßt wird und gleichzeitig und vorab ein Erwärmen der Schweißstelle durch Anblasen mit Heißluft erfolgt. Durch die Wärmeeinwirkung er-folgt dann ein Verschmelzen der Kunststoffe miteinander und somit eine materialschlüssige Verbindung.

Damit ein Schweißvorgang gleichmäßiger Güte und Qualität durchgeführt wird, erfolgt ein Einsteuern oder Einregeln der Anlagekraft des Schweißschuhs des Schweißextruders 12 an der Schweißstelle dadurch, daß der Schweißextruder 12 gegenüber dem Halter 13 in wenigstens einer Richtung verfahren wird. Das Verfahren des Schweißextruders 12 gegenüber dem Werkstück, also gegenüber dem Großbehälter 33 erfolgt dabei mit der Vorschubgeschwindigkeit durch den Vorschub, der mittels der Stellmotoren 22a bis 22d durch Verfahren von Laufschiene, durch Verfahren von Brücke 20, Laufkatze 21 und ggf. auch Führungsstange 14 erzeugt.

Das Einregeln bzw. Einsteuern der Anlagekraft gemäß dem Schritt 504 kann dabei aber nicht nur zum Erzeugen einer Schweißnaht gleichmäßiger Güte, sondern auch zu einem Nachführen des Schweißextruders 12 an der Kontur des Behälters 13 verwendet werden. Wird der Schweißextruder 12 in eine Ver-fahrrichtung exakt parallel zur Oberfläche des Werkstückes, dem Großbehälter 33, verfahren, so bleibt die Anlagekraft des Schweißextruders 12 konstant, und die Lage des Schweißextruders 12 bezüglich dem Halter 13 ändert sich nicht. Erfolgt jedoch kein paralleles Verfahren, sondern weicht die Vor-schubrichtung des Schweißextruders 12 und damit die Verfahr-wege von Brücke, Laufkatze und Führungsstange von der Erstreckung des Behälters ab, so muß der Schweißextruder 12 um einen Stellweg gegenüber den ihn tragenden Halter 13 verfahren werden.

Gemäß dem Schritt 506 dient der in Schritt 505 ermittelte Stellweg dazu, die weitere Verfahrrichtung des Halters 13 und damit des Schweißextruders 12 an das Werkstück anzupassen, indem der Verfahrweg, der über die Stellantriebe 22a bis 22d an dem Halter 13 erzeugt wird, entsprechend verändert wird. Dies kann sowohl durch eine Steuerung als auch durch eine Regelung erfolgen. Zum Ansteuern der Stellantriebe 22a bis 22d und zur Ausführung der entsprechenden Steuerung und/oder Regelung dient die beispielsweise auf der Laufkatze montierte Steuereinrichtung 23. Die Steuereinrichtung 23 kann jedoch auch außerhalb der dargestellten Schweißvorrichtung 11 angeordnet sein und nur über Datenübertragungsmittel an die Schweißvorrichtung 11 angekoppelt sein.

Nach dem Anpassen der weiteren Verfahrrichtung an die Kontur des Behälters 33 wird das Signal eines Eckensensors erfaßt und abgefragt. Der Eckensensor kann dabei beispielsweise ein im Bereich des Schweißschuhs des Schweißextruders 12 angeordneter Tastsensor oder eine optische Sensoreinrichtung sein oder aber ebenfalls aus der Veränderung des Stellweges des Schweißextruders hergeleitet werden, wenn dieser sich in einer gewissen Weise sprunghaft ändert. Am besten ist es jedoch, wenn ein Sensor angeordnet ist, der gegenüber der Verfahrrichtung des Schweißextruders 12 einen gewissen Vorlauf hat, damit das Vorhandensein einer Ecke an dem Werkstück erfaßt wird, bevor der Schweißextruder 12 diese selbst erreicht hat. Sobald gemäß dem Schritt 508 festgestellt wird, daß eine Ecke noch nicht erreicht wird, wird gemäß dem Schritt 509 abgefragt, ob die Ausgangsposition, die zu Beginn des Schweißvorgangs in der Ansatzstelle durch den Schweißextruder 12 eingenommen wurde, wieder erreicht wurde. Ist dies der Fall, so wird darauf geschlossen, daß ein Schweißvorgang über einen geschlossenen Linienzug hinweg durchgeführt worden ist und der Schweißvorgang somit beendet werden kann. Soweit der Schweißvorgang noch nicht beendet werden kann, also die Ansatzstelle des Schrittes 501 nicht wieder erreicht worden ist, wird gemäß dem Schritt 509 wieder zu dem Schritt 503 zurückgesprungen und ein weiterer Vorschub des Schweißextruders 12 in der nun gültigen Vorschubrichtung erfolgt.

Soweit im Schritt 508 durch geeignete Mittel gemäß dem Schritt 507 festgestellt wurde, daß eine Ecke oder Kante des Werkstückes 33 erreicht wurde, wird ein gesonderter Eckenverfahrvorgang durchgeführt. Hierzu wird gemäß dem Schritt 510 zunächst die Verfahrgeschwindigkeit verändert. Sie wird gemäß dem Schritt 510 an die besondere Verfahrsituation des Fahrens einer Ecke angepaßt. Kern dieser Anpassung ist es, daß der Schweißextruder 12 in seiner Anlage an der Schweißstelle eine möglichst gleichförmige Geschwindigkeit hat, die in der Regel der Vorschubgeschwindigkeit entlang einem glatten geradlinigen Verlauf der Schweißlinie entspricht. Aufgrund der besonderen Gegebenheiten, nämlich einer der unter Umständen erforderlichen Anpassung an eine vorhandene Eckenkappe sowie der Notwendigkeit, daß in diesem Bereich die Schweißraupe in etwas dicker ausgebildet wird, kann es jedoch auch erforderlich sein, daß die Vorschubgeschwindigkeit des Schweißschuhs des Schweißextruders 12 gegenüber dem Werkstück im Eckenbereich auch etwas verringert wird. Andererseits muß die Verfahrgeschwindigkeit von Brücke und Laufkatze kurzzeitig stark erhöht werden, da die Teleskopstange 14 ein Kreisbogensegment fahren muß, dessen Mittelpunkt nahezu durch die Lage der Ecke definiert wird, damit der Schweißextruder 12 mit seinem Schweißschuh in Anlage mit dem Werkstück 33 im Bereich der Ecke bleibt. Hierzu wird gemäß den Schritten 511 und 512 unter ständiger Anpassung der Verfahrrichtung von der Führungsstange wenigstens nahezu ein Kreisbogen gefahren. Gleichzeitig wird von der Führungsstange eine Schwenkbewegung durchgeführt. Die Schwenkbewegung, die über ein Verdrehen der Führungsstange 14 um sich selbst, durch eine Bewegung des Drehtellers 25 mit dem entsprechenden Stellantrieb 22d erzeugt, eine Rotation um die Achse der Führungsstange 14 durchführen, damit die Spitze des Schweißextruders 12 mit seinem Schweißschuh auf das Werkstück ausgerichtet bleibt. Gemäß dem Schritt 513 wird dann überprüft, ob der Eckwinkel, in der Regel ein 90°-Winkel, abgefahren wurde und der Eckenbereich somit verlassen wurde. Dies kann alternativ zum Verfahren über einen vorgegebenen, beispielsweise einem 90°-Winkel, auch durch die entsprechenden Sensoren, die die Ecken erkennen oder auch über andere Sensoren erfaßt werden. Wird gemäß dem Schritt 513 festgestellt, daß der Eckwinkel noch nicht abgefahren wurde, wird wieder zum Schritt 510 zurückgesprungen. Anderenfalls wird vom Schritt 513 zum Schritt 503 gesprungen, und es erfolgt ein Vorschub des Schweißextruders in der nun neuen Vorschubrichtung, die durch die Ausrichtung der Fläche hinter der Kante vorgegeben wird.

## Patentansprüche

1. Schweißvorrichtung zum Herstellen von Kunststoffbehältern, insbesondere Großbehältern, wobei die Schweißvorrichtung einen Schweißextruder aufweist, der gegenüber einem ihn tragenden Halter derart verfahrbar ist, daß eine Anlage des Schweißextruders an die Schweißstelle mit einer definierten Kraft erfolgt, **dadurch gekennzeichnet, daß** der Halter (13) am freien Ende einer Führungsstange (14) angeordnet ist, wobei die Führungsstange (14) in einer Portalverfahreinrichtung (18) in einer Verfahrebene verfahrbar und aus der Verfahrebene herausragend gehalten ist.

2. Schweißvorrichtung (11) nach Anspruch 1, **dadurch gekennzeichnet, daß** die Portalverfahreinrichtung (18) parallele Laufschienen (19) aufweist, wobei auf den Laufschienen (19) in einer Richtung quer zu ihrer Erstreckung verfahrbar eine Brücke (20) angeordnet ist, wobei auf der Brücke (20) eine Laufkatze (21) angeordnet ist, die in Erstreckungsrichtung der Brücke (20) verfahrbar ist und die Führungsstange (14) trägt, die Führungsstange (14) insbesondere axial zu ihrer Erstreckungsrichtung verstellbar an der Laufkatze (21) gehalten und vorzugsweise als Teleskopstange ausgebildet ist.

3. Schweißvorrichtung (11) nach einem der vorhergehenden Ansprüche, **dadurch gekennzeichnet, daß** der Schweißextruder (12) in der Verfahrebene um 360° um die Teleskopstange verschwenkbar gehalten und vorzugsweise um einen Winkel, insbesondere von möglichst annähernd 180°, um eine parallel zur Verfahrebene verlaufende Schwenkachse herum verdrehbar ist, wodurch der Schweißextruder (12) durch Verdrehen und Verschwenken in der Lage ist, weitgehendst die Oberfläche einer Kugel zu bestreichen.

4. Schweißvorrichtung (11) nach einem der vorhergehenden Ansprüche, **dadurch gekennzeichnet, daß** eine Steuereinrichtung (23) zur Ansteuerung des Verfahrens wenigstens der Portalverfahreinrichtung (18) zum selbsttätigen Erzeugen eines geschlossenen Zuges einer Schweißnaht (31) entlang einer Oberfläche des Behälter vorgesehen ist.

5. Schweißvorrichtung (11) nach einem der vorhergehenden Ansprüche, **dadurch gekennzeichnet, daß** am Schweißextruder (12) ein Sensor angeordnet ist, mittels dessen das Erreichen einer Kante des Behälters erfaßbar ist.

6. Schweißvorrichtung (11) nach einem der vorhergehenden Ansprüche, **dadurch gekennzeichnet, daß** in einer Steuereinrichtung (23) mittels Sensoren der Stellweg des Schweißextruders (12) bezüglich seinem Halter (13) erfaßbar ist, der erforderlich ist, um eine konstante Anlagekraft des Schweißextruders (12) an der Schweiß-stelle aufrechtzuerhalten, wobei in Abhängigkeit des zurückgelegten Verfahrwegs der Portalverfahreinrichtung (18) des Schweißextruders (12) und des Stellweges des Schweißextruders (12) der weitere Verfahrweg so bestimmt wird, daß der Schweißextruder (12) selbsttätig der Kontur des Kunststoffbehälters folgt.

7. Schweißvorrichtung (11) nach Anspruch 6, **dadurch gekennzeichnet, daß** die axiale Position der Führungsstange (14) in Abhängigkeit von Verfahrweg und Stellweg bestimmbar ist.

8. Schweißvorrichtung (11) nach einem der vorhergehenden Ansprüche, **dadurch gekennzeichnet, daß** die Schweißvorrichtung (11) dem Erzeugen umlaufender, ununterbrochener Schweißnähte, insbesondere zum Erzeugen von Stumpf- oder Kehlnähten dient.

9. Schweißvorrichtung (11) nach einem der vorhergehenden Ansprüche, **dadurch gekennzeichnet, daß** die Schweißvorrichtung (11) dem Aufschweißen von insbesondere umlaufenden Verstärkungsbändern auf vorzugsweise glattflächigen Seitenwänden der Kunststoffbehälter dient, wobei die Verstärkungsbänder entweder zumindest auf der Außenseite oder zumindest auf der Innenseite des Behälters aufschweißbar sind.

10. Schweißvorrichtung (11) nach einem der vorhergehenden Ansprüche, **dadurch gekennzeichnet, daß** die Schweißvorrichtung (11) dem Verschweißen des Behälters mit einem Boden (34) oder einem Deckel (38) dient.

11. Verfahren zur Durchführung eines Schweißvorganges, insbesondere mittels einer Schweißvorrichtung (11) nach einem der vorhergehenden Patentansprüche, **dadurch gekennzeichnet, daß**
- ein Schweißextruder (12) in Anlage mit einer Schweiß-stelle an einem Kunststoffbehälter gebracht wird,
- eine definierte Anlagekraft des Schweißextruders (12) an der Schweißstelle selbsttätig erzeugt und aufrechterhalten wird,
- wobei zur Erzeugung einer Schweißnaht (31) in Form eines geschlossenen Linienzuges ein Vorschub des Schweißextruders (12) derart erfolgt, daß der Schweißextruder (12) selbsttätig der Kontur des Kunststoffbehälters folgt.

12. Verfahren nach Anspruch 11, **dadurch gekennzeichnet, daß** das Verfahren des Schweißextruders (12) gegenüber dem Kunststoffbehälter durch Verfahren einer Portalverfahreinrichtung (18) er-folgt, an der der Schweißextruder (12) angelenkt ist.

13. Verfahren nach Anspruch 11 oder 12, **dadurch gekennzeichnet, daß** die Schweißvorrichtung (11) Sensoren zur Erfassung von Kanten des Kunststoffbehälters aufweist, wobei dann, wenn das Erreichen einer Kante festgestellt wird, ein Kantenverfahrvorgang durchgeführt wird.

14. Verfahren nach Anspruch 13, **dadurch gekennzeichnet, daß** bei einem Kantenverfahrvorgang ein Verfahren des Schweißextruders (12) derart erfolgt, daß die Geschwindigkeit des Schweißextruders (12) gegenüber dem Kunststoffbehälter an der Schweißstelle annähernd konstant bleibt und nach der Durchführung die Verfahrrichtung des Schweißextruders (12) gegenüber der zuvor bestehenden Verfahrrichtung rechtwinklig ist, wobei während des Kantenverfahrvorganges insbesondere ein Verschwenken des Schweißextruder (12) um die Führungsstange (14) erfolgt.

15. Verfahren nach einem der Ansprüche 11 bis 14, **dadurch gekennzeichnet, daß** der Stellweg des Schweißextruders (12) bezüglich seinem ihn tragenden Halter (13) in Abhängigkeit des Verfahrweges der Portalverfahreinrichtung (18) zum Aufrechterhalten der konstanten Anlagekraft des Schweißextruders (12) an der Schweißstelle erfaßt wird und daß in Abhängigkeit dieses Wertes die Richtung des weiteren Verfahrweges der Portalverfahreinrichtung (18) bestimmt wird.

16. Verfahren nach einem der Ansprüche 11 bis 15, **dadurch gekennzeichnet, daß** ein Schweißvorgang beendet wird, wenn der Schweißextruder (12) die zu Beginn des Schweißvorgangs bestehende Ausgangsposition wieder erreicht.
